(19) Europäisches Patentamt
European Patent Office
Office européen des brevets

(11) **EP 4 607 293 A1**

(12) **EUROPEAN PATENT APPLICATION**

(43) Date of publication:
27.08.2025 Bulletin 2025/35

(21) Application number: 24159728.5

(22) Date of filing: 26.02.2024

(51) International Patent Classification (IPC):
*G05B 13/02* *(2006.01)*

(52) Cooperative Patent Classification (CPC):
G05B 13/027

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Gravis Robotics AG
8050 Zurich (CH)

(72) Inventor: Nan, Fang
8006 Zurich (CH)

(74) Representative: E. Blum & Co. AG
Franklinturm
Hofwiesenstrasse 349
8050 Zürich (CH)

(54) **UNIVERSAL CONTROL POLICY FOR MACHINE ACTUATORS**

(57) The invention is notably directed to a computer-implemented method of controlling a given machine (3), in particular a hydraulic machine, wherein the method comprises loading a control module (12) and an adaptation module (14). The control module (12) has been trained together with an encoder (11), whereby the encoder has learned to generate a latent variable for each actuator of each machine of a set of machines based on dynamics (21) of said each actuator and the control module (12) has learned to produce control signals to control said each actuator based on said dynamics (21) and said latent variable. The adaptation module (14) has been trained to estimate said latent variable for said each actuator based on said dynamics (21) and control signals that the control module (12) has learned to produce. The dynamics used for training purposes are preferably obtained through simulation. The method further comprises: running the control module (12) to produce initial control signals and applying said initial control signals to one or more actuators of a given machine (3); and running the adaptation module (14) to estimate one or more latent variables for the one or more actuators, respectively, based on the initial control signals and initial dynamics (31) of the one or more actuators as observed in response to applying said initial control signals. Finally, the method comprises operating the one or more actuators based on further control signals as produced by the control module (12) using the one or more latent variables estimated. The invention is further directed to related computerized systems and other systems, as well as computer program products.

FIG. 1

**Description**

TECHNICAL FIELD

The invention is directed to a computer-implemented method for controlling machines such as hydraulic machines, as well as related computer program products, computerized systems, and other systems comprising such computerized systems interfaced with machines. In particular, it is directed to methods enabling an automatic controller adaptation on different hydraulic systems, simplifying the modelling and control design effort in hydraulic machinery automation.

BACKGROUND

The automation of machines such as hydraulic machinery has the potential to improve productivity and reduce human labour in many industries. However, the complex dynamics of actuators (particularly hydraulic actuators), variability from machine to machine, and system degradation over time, make it challenging to design controllers for machine automation. Consequently, existing approaches typically rely on manual tuning and data collection.

For instance, machinery is widely used in construction, agriculture, forestry, and disaster relief. Machines may have to be deployed in remote, risky, and harsh environments, which are not safe for human operators. In addition, efficient operations of heavy machinery require skilled operators, which are in short supply. Autonomous heavy machinery is thus believed to be a promising direction; it has been projected that robotic machinery will play a significant role in many industries in the near future.

In the automation of heavy machinery, a major challenge is the control design for hydraulic actuators. Unlike electric motors, hydraulic cylinders are difficult to model and control due to the underlying cylinder topology and fluid dynamics. In most hydraulic machines, a multistage hydraulic circuit is used to control the cylinder as the force required to move the main stage piston is too large to be directly controlled. Now, the use of the pilot stage introduces additional nonlinearity and time delay to the actuation. The use of overlapping valves is common in hydraulic machinery to prevent leakage and increase efficiency, but it also brings additional nonlinearity and dead zones to the hydraulic dynamics.

Experienced machine operators can handle the complex dynamics of the hydraulic cylinders and perform coordinated control of multiple actuators precisely and efficiently. Human operators can also operate different machines and quickly adapt their skills to a new machine to carry out tasks efficiently. Existing machine automation solutions, however, cannot achieve the same level of generalizability; they are often designed to be machine specific. Some works use controllers composed of a feedforward and a feedback module, both tuned by human experts [1]. Data-driven modelling using machine learning approaches has also been proposed to construct models of the hydraulic systems, which are then used for offline controller training [2], [3], [4], [5]. Such methods have been shown effective in controlling the hydraulic actuators in real-world experiments and achieved decent accuracy in tasks like end-effector trajectory tracking with the hydraulic arms on excavators. However, they heavily depend on machine-specific data for tuning, look-up table generation, or model training, and do not perform well in transferring to different machines without repeating these tedious processes.

Several works have been directed towards the control of hydraulic machines. The most studied task is the control of excavator arms, while early works focused on the kinodynamic control of cranes. The actuator model was assumed to be known, allowing the design of model-based controllers. However, in practice, the physical parameters are often not available and are subject to change.

A practical approach used in various applications revolves around manually tuning a controller with feedforward and feedback blocks [1]. In [1], a feedforward control signal is generated using a manually recorded look-up table, while a PID controller compensates for the remaining error. This approach was successfully used with an Inverse Kinematics (IK) controller in surface finishing tasks, achieving centimetre-level error. This approach is also used by most commercially available excavator automation solutions, either by the manufacturers themselves or third-party companies. The main limitation of this approach is the effort required to manually collect the feedforward controller and tune the feedback controller for each machine. It is shown in [6] that the feedforward can be generated automatically if the other parameters in the actuator dynamics are available.

In recent years, machine learning approaches for modelling hydraulic dynamics have received much attention. Egli and Hutter [2] proposed a data-driven modelling approach for hydraulic systems using artificial neural networks (ANNs). The ANN model of the machine dynamics is then used in a simulation environment to train a learned controller using reinforcement learning (RL). Similarly, [3], [4] used hybrid model structures to reduce the number of trainable parameters and achieve faster training. Learning-based methods achieve precise control of the excavators. However, they still require collecting machine-specific datasets.

Adaptive control methods can deal with systems with time-varying or initially unknown parameters. Model-based adaptive control has been extensively studied and successfully applied to real-world control systems. A few works applied similar ideas in learning-based control. Yu et al. proposed the use of a universal control policy dependent on parameters related to environment or system dynamics. Online estimation over these parameters can then be performed with ANN prediction [7] or Bayesian optimization [8], [9]. Guo et al. further showed the potential of using a differentiable simulator to identify system parameters that can be used by a universal policy [10]. Such approaches make it possible to adapt to unknown system parameters, but they have been primarily evaluated in simulation and with few unknown parameters. In reality, the unknown parameter space of the system is often more complex and has higher dimensions, making Bayesian optimization slow. In a system with high nonlinearities and heavy delay, such as hydraulic systems, the unknown parameters are also difficult to predict from a small amount of observed data.

More generally, similar issues arise with various kinds of machines. Thus, there is a need to improve controllers for machine automation, in particular the automation of hydraulic machinery.

The following documents form part of the background art:

[1] D. Jud, S. Kerscher, M. Wermelinger, E. Jelavic, P. Egli, P. Leemann, G. Hottiger, and M. Hutter, "HEAP - The autonomous walking excavator," Automation in Construction, vol. 129, p. 103783, 2021.

[2] P. Egli and M. Hutter, "A General Approach for the Automation of Hydraulic Excavator Arms Using Reinforcement Learning," IEEE Robotics and Automation Letters, vol. 7, no. 2, pp. 5679-5686, 2022.

[3] M. Lee, H. Choi, C. Kim, J. Moon, D. Kim, and D. Lee, "Precision Motion Control of Robotized Industrial Hydraulic Excavators via Data-Driven Model Inversion," IEEE Robotics and Automation Letters, vol. 7, no. 2, pp. 1912-1919, 2022.

[4] J. Weigand, J. Raible, N. Zantopp, O. Demir, A. Trachte, A. Wagner, and M. Ruskowski, "Hybrid Data-Driven Modelling for Inverse Control of Hydraulic Excavators," in 2021 IEEE/RSJ International Conference on Intelligent Robots and Systems (IROS), 2021, pp. 2127- 2134.

[5] A. Taheri, P. Gustafsson, M. Rosth, R. Ghabcheloo, and J. Pajarinen, "Nonlinear Model Learning for Compensation and Feedforward Control of Real-World Hydraulic Actuators Using Gaussian Processes," IEEE Robotics and Automation Letters, vol. 7, no. 4, pp. 9525-9532, 2022.

[6] J. Nurmi and J. Mattila, "Automated Feed-Forward Learning for Pressure-Compensated Mobile Hydraulic Valves With Significant Dead-Zone," in ASME/BATH 2017 Symposium on Fluid Power and Motion Control. American Society of Mechanical Engineers Digital Collection, 2017.

[7] W. Yu, J. Tan, C. Karen Liu, and G. Turk, "Preparing for the Unknown: Learning a Universal Policy with Online System Identification," in Robotics: Science and Systems XIII. Robotics: Science and Systems Foundation, 2017.

[8] W. Yu, C. K. Liu, and G. Turk, "Policy Transfer with Strategy Optimization," in International Conference on Learning Representations, 2018.

[9] W. Yu, J. Tan, Y. Bai, E. Coumans, and S. Ha, "Learning Fast Adaptation With Meta Strategy Optimization," IEEE Robotics and Automation Letters, vol. 5, no. 2, pp. 2950-2957, 2020.

[10] M. Guo, W. Yu, D. Ho, J. Wu, Y. Bai, K. Liu, and W. Lu, "Universal Controllers with Differentiable Physics for Online System Identification," 2021.

[11] Y. Du and I. Mordatch, "Implicit Generation and Modeling with Energy Based Models," in Advances in Neural Information Processing Systems, vol. 32. Curran Associates, Inc., 2019.

[12] M. Ruderman, "Full- and reduced-order model of hydraulic cylinder for motion control," in IECON 2017 - 43rd Annual Conference of the IEEE Industrial Electronics Society, 2017, pp. 7275-7280.

[13] J. Schulman, F. Wolski, P. Dhariwal, A. Radford, and O. Klimov, "Proximal Policy Optimization Algorithms," arXiv: 1707.06347, 2017.

[14] J. Schulman, P. Moritz, S. Levine, M. Jordan, and P. Abbeel, "High Dimensional Continuous Control Using Generalized Advantage Estimation," arXiv:1506.02438, 2018.

[15] B. Amos, L. Xu, and J. Z. Kolter, "Input Convex Neural Networks," in Proceedings of the 34th International Conference on Machine Learning. PMI,R, 2017, pp. 146-155.

[16] E. Jelavic, T. Kapgen, S. Kerscher, D. Jud, and M. Hutter, "Harveri: A Small (Semi-) Autonomous Precision Tree Harvester," in Innovation in Forestry Robotics: Research and Industry Adoption, ICRA 2022 IFRRIA Workshop, 2022.

SUMMARY

According to a first aspect, the invention is embodied as a computer-implemented method of controlling a given machine, such as a hydraulic machine. The method first comprises loading a control module and an adaptation module, e.g., in the main memory of the computerized system used to perform the method. The control module is assumed to have been trained with an encoder, where this encoder has learned to generate a latent variable for each actuator of each machine of a set of machines based on dynamics of each actuator. Conversely, the loaded control module is a module that has learned to produce control signals to control each actuator based on its dynamics and the latent variable as generated by the encoder. The adaptation module, for its part, has been trained to estimate said latent variable for each actuator based on its dynamics and the control signals that the control module has learned to produce. Such dynamics are preferably simulated and can notably be efficiently captured by states of the actuators (e.g., positions, speeds, and/or accelerations) or by sequences of such states. The adaptation module preferably uses less input data (e.g., a smaller input dataset of measurable data obtained from the dynamics) than the encoder.

The method then includes an adaptation phase, during which the control module is run to produce initial control signals, which are applied to one or more actuators of a given machine, i.e., the machine to be controlled. The adaptation module is concurrently run to estimate one or more latent variables for the one or more actuators, respectively. This estimation is based on the initial control signals and initial dynamics observed in response to applying the initial control signals. Finally, during a subsequent, normal operation phase, the one or more actuators are operated based on further control signals as produced by the control module using the one or more latent variables as estimated by the adaptation module.

In other words, the proposed method relies on a tripartite training configuration (encoder, control module, adaptation module) and a bipartite operation at runtime (control module and adaptation module). The functional complementarity between the three modules (encoder, control module, adaptation module) makes it possible to achieve a "universal" control module at runtime. That is, the control module is trained and then customized to enable a universal control policy. This control policy is conditioned on latent variables, which are determined by the adaptation module and, this, for each actuator of the given machine. Thus, the adaptation module makes it possible to customize the control module to any particular machine upon deployment. The adaptation module and the control module can thus be regarded as enabling a universal control policy.

In embodiments, the steps of running the control module and running the adaptation module are interlaced, so as to repeatedly estimate and accordingly refine the one or more latent variables. That is, the control module is adaptively run based on the one or more latent variables as repeatedly estimated by the adaptation module. This allows a continuous operation of the machine, during which the control performance gradually improves. The same approach can actually be applied to continuously refine the performance of the control module with data collected during operation, such that slow variations in the machine dynamics (e.g., due to aging and/or temperature changes) can be compensated seamlessly.

In particularly preferred embodiments, the dynamics of each actuator are simulated dynamics, i.e., dynamics obtained through simulation. This means that the encoder has learned to generate latent variables based on simulated dynamics. Likewise, the control module has learned to produce control signals based on simulated dynamics, in addition to latent variables as generated by the encoder. For completeness, the adaptation module has been trained to estimate the latent variable for each actuator based on its simulated dynamics and the control signals that the control module has learned to produce. Compared with actual dynamics of actual machines, simulated dynamics can potentially take into account a large number of machine-actuator configurations. Assuming that the simulations are sufficiently realistic and exhaustive, this approach increases the chances of arriving at well-targeted latent variables for any real actuator. The latent variables play the role of digital fingerprints of the actuators: the better these variables are targeted, the better the results.

The encoder, the control module, and the adaptation module, preferably rely on distinct outputs generated from the actuator dynamics, whether simulated or not. For instance, in embodiments, the encoder has learned to generate latent variables based on responses of the actuator as obtained from the simulated dynamics. Conversely, the control module and the adaptation module may rely on measurable properties, which can be obtained from the simulated dynamics during the training phase or from actual dynamics at runtime. Optionally, any or each of the adaptation module and the control module may rely on physical properties of the actuators, where such properties can be estimated, computed, or otherwise obtained, from the simulated dynamics (during the training phase) or actual dynamics at runtime. On the contrary, the encoder may additionally take into consideration non-measurable data (such as parameters of the simulated system). That is, the encoder may be fed with a more exhaustive input dataset (e.g., encompassing additional privileged information that is not available on the real machine 3) than the control module and/or the adaptation module.

In preferred embodiments, each machine of the set of machines used for training purposes is a hydraulic machine. In this case, the dynamics have been simulated for each actuator of each machine of the set of hydraulic machines, based on kinematic and/or dynamic properties of the actuators. Hydraulic machines can therefore be more easily automated, which has advantages, particularly for their operation in environments not conducive to the presence of human operators.

In embodiments, the adaptation module relies on initial estimates of the latent variables. That is, the step of running the adaptation module comprises initially running the adaptation module based on initial estimates of the one or more latent variables, e.g., initial guesses for, or default values, of the latent variables.

A particularly preferred implementation of the control module is one in which the control module takes as input a history of input-output observations for each of the one or more actuators. This history is based on the dynamics of the actuators. More precisely, each input-output pair of the input-output observations consists of: (i) output signals as produced by the control module at a given time; and (ii) states of each of the one or more actuators as obtained in response to applying such output signals to each of the one or more actuators. Similar input-output observations can be used to train the control module. In addition, the control module may further take as input a reference of future desired states (i.e., a lookahead of states) for each of the one or more actuators.

In embodiments, the method further comprises initial training steps, i.e., prior to loading the control module and the adaptation module. The initial training steps can be performed by the same computerized system as used to control the given machine, or by a different computerized system. Such steps notably comprise training the control module together with the encoder, for the encoder to learn to generate said latent variable based on said dynamics, and the control module to learn to produce such control signals based on said dynamics and said latent variable. The training steps further comprise training the adaptation module for it to learn to estimate said latent variable for each actuator.

According to another aspect, the invention is embodied as a computerized system. The computerized system is adapted to be interfaced with a given machine. The computerized system is configured to load a control module and an adaptation module, as described above in reference to the first aspect of the invention. The computerized system is further configured to run the control module and the adaptation module, to estimate latent variables and apply control signals generated by the control module to operate actuators of the given machine, consistently with the first aspect of the invention.

In preferred embodiments, the computerized system is further configured to run the control module and the adaptation module in an interlaced manner, so as to repeatedly estimate and accordingly refine the one or more latent variables, whereby the control module is adaptively run based on the one or more latent variable as repeatedly estimated, in operation.

In embodiments, the computerized system is further configured to simulate said dynamics and accordingly train each of the encoder, the control module, and the adaptation module, based on said dynamics.

According to a further aspect, the invention is embodied as a system comprising a computerized system as described above, as well as the given machine, wherein the computerized system is interfaced with the given machine, e.g., a hydraulic machine.

According to a final aspect, the invention is embodied as a computer program product for controlling a given machine. The computer program product comprises a computer readable storage medium having program instructions embodied therewith. The program instructions are executable by processing means of a computerized system to cause the latter to perform steps of any of the methods described above.

BRIEF DESCRIPTION OF THE DRAWINGS

These and other objects, features and advantages of the present invention will become apparent from the following detailed description of illustrative embodiments thereof, which is to be read in connection with the accompanying drawings. The illustrations are for clarity in facilitating one skilled in the art in understanding the invention in conjunction with the detailed description. In the drawings:

FIG. 1 is a diagram schematically illustrating components of a system according to embodiments, where the system comprises a computerized system interfaced with a hydraulic machine;

FIGS. 2A, 2B, and 2C, are diagrams illustrating the training of an encoder and a control policy (FIG. 2A), the training of an adaptation module (FIG. 2B), as well as the deployment of the adaptation module and control policy to control a hydraulic machine (FIG. 2C), as in embodiments;

FIG. 3 is a diagram of a generic hydraulic cylinder used on heavy machinery, as used in embodiments;

FIG. 4 represents the structure of a model used to train a controller in simulation, as in embodiments;

FIGS. 5A- 11 plot various quantities pertaining to particular hydraulic systems and controllers, as involved in particularly preferred embodiments. In detail:

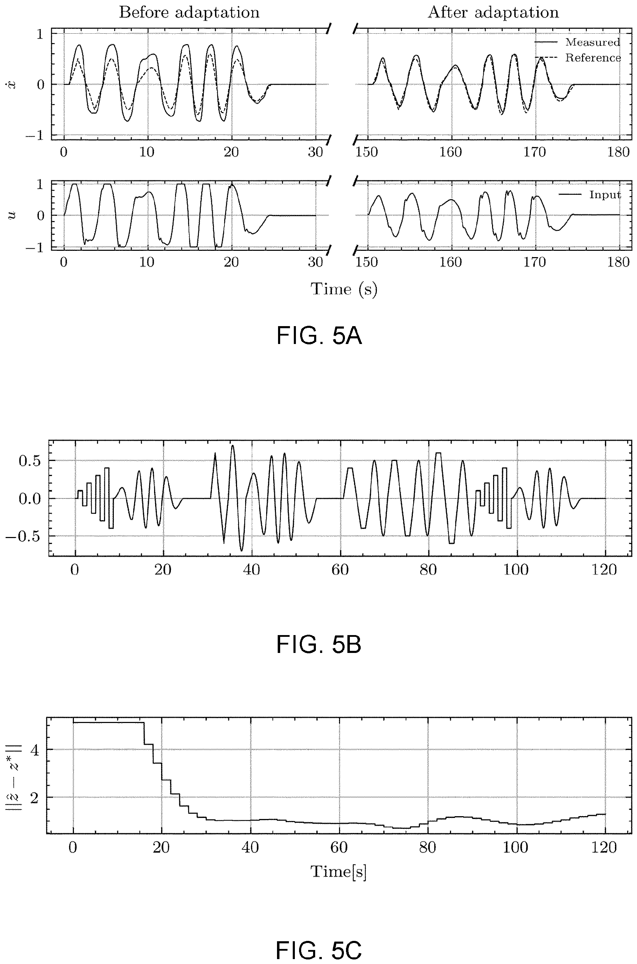

FIG. 5A shows the reference velocity tracking performance on a simulated system, before and after adaptation. The reference and tracked velocities are shown in the first row, and the input is shown in the second row;

FIG. 5B is a plot representing a corresponding reference signal used during the adaptation process;

FIG. 5C illustrates the convergence of a latent variable during the adaptation, shown by the 2-norm of the difference between estimated latent and the ground truth predicted by the encoder;

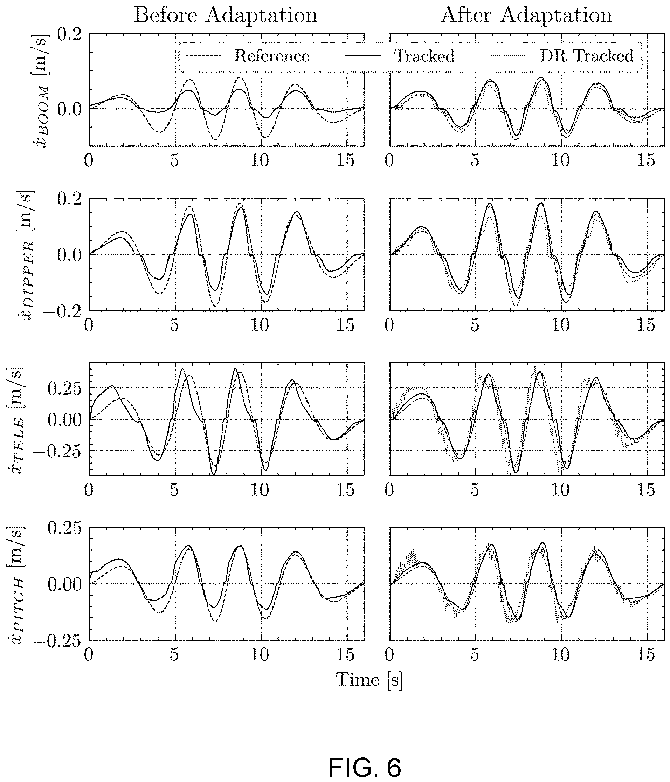

FIG. 6 depicts the adaptation performance of the controller on an autonomous excavator (called HEAP, for Hydraulic Excavator for an Autonomous Purpose). Each subplot shows the tracking performance of the proposed controller on one of the four cylinders. The left half of each subplot shows the performance before adaptation, and the right half shows the performance after adaptation and the performance of the controller trained using domain randomization;

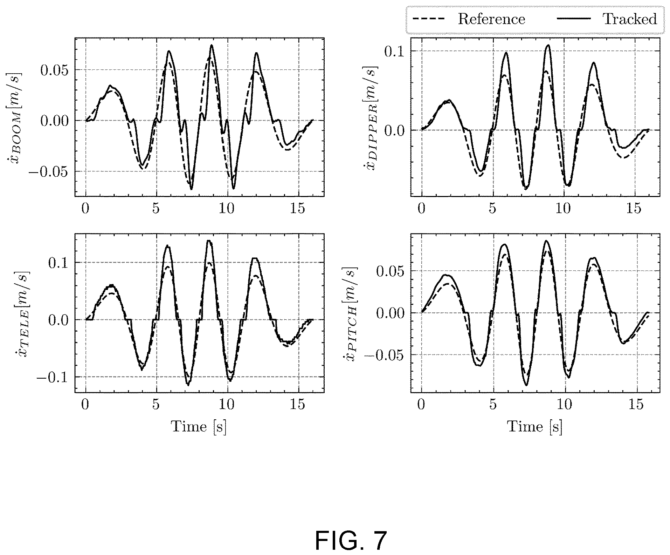

FIG. 7 reflects the cylinder velocity tracking performance on the autonomous excavator HEAP after adaptation. Each subplot shows one active cylinder on the arm of HEAP. The reference velocity is a modulated sinusoid;

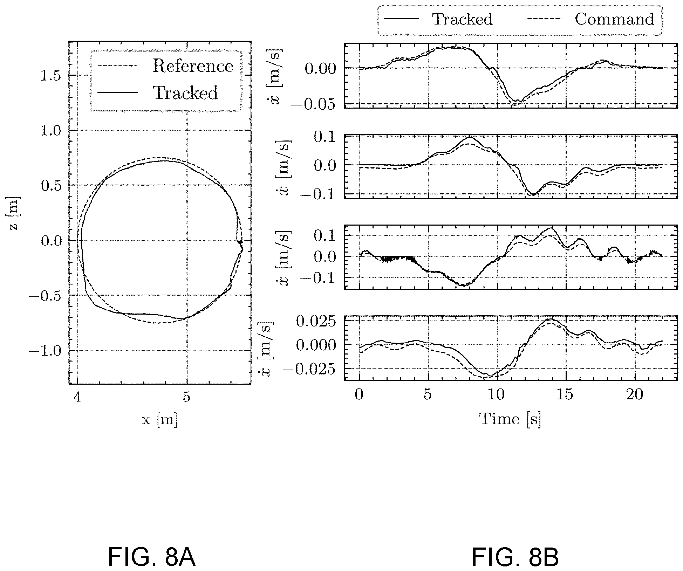

FIG. 8A reflects the circular trajectory tracking performance of a trained control module, as in embodiments. FIG. 8A shows the measured shovel edge trajectory and the reference trajectory. FIG. 8B shows the measured cylinder velocities and the reference cylinder velocities. Each subplot in FIG. 8B shows one active cylinder on the arm of HEAP. The reference trajectory is a circle with a diameter of 1.5 m. The reference velocity is 40 cm s$^{-1}$ and the reference acceleration is 5 cm s$^{-2}$. The trajectory is defined in the cabin frame, where the x-axis is defined as the horizontal direction of the excavator arm extension, and z is the vertical direction pointing up;

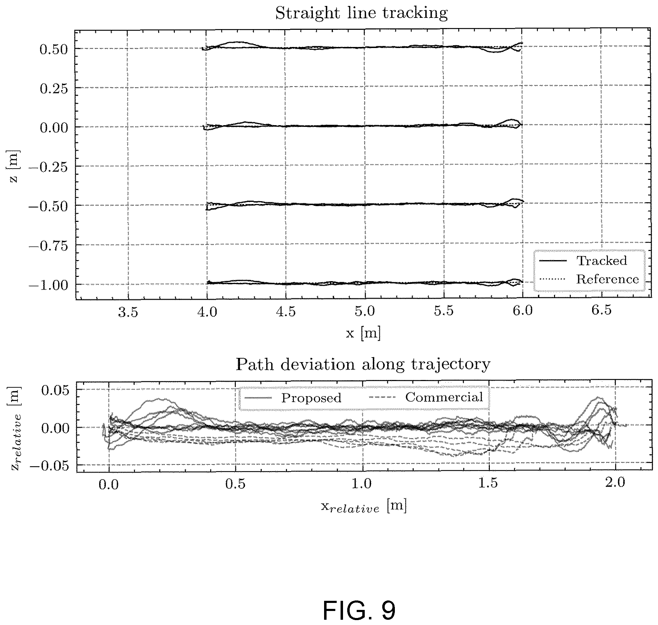

FIG. 9 shows the result of a straight-line tracking experiment with a trained control module, as in embodiments. The reference trajectories (top) are straight lines with a length of 2 m, with a reference velocity at 15 cm s$^{-1}$ and a 7.5 cm s$^{-2}$ reference acceleration. Each trajectory is tracked in both directions. The plot corresponds to the 'Slow' case in Table I (see detailed description). FIG. 9 (bottom) further shows the path deviation along the tracked trajectory, and a comparison with a commercial grading system.

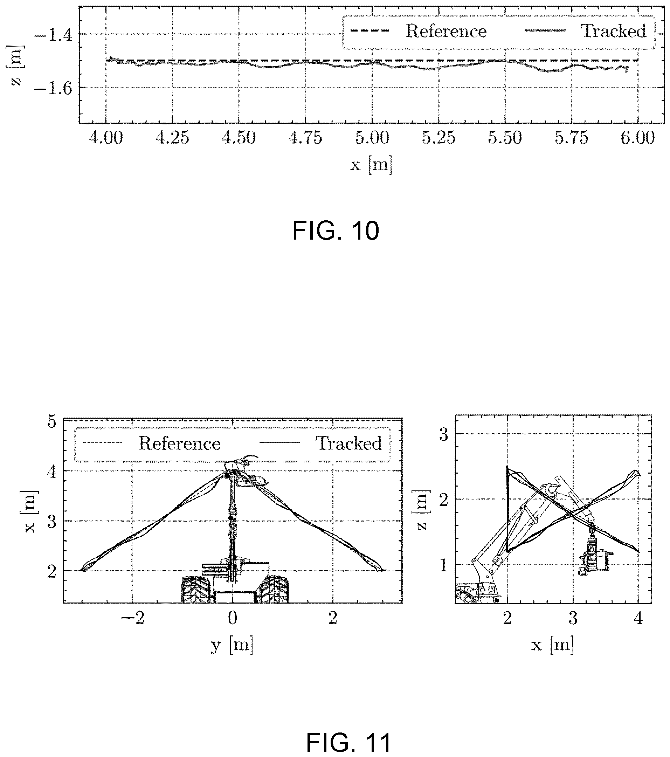

FIG. 10 is a plot of a given, recorded trajectory. The reference trajectory is a straight line with a length of 2 m and a ground penetration of about 5 cm. The reference velocity is 20 cm s$^{-1}$; and

FIG. 11 is a plot representing the task space tracking performance of the control module on an automated tree harvester (called SAHA, for Supervised Autonomous HArvester), as in embodiments. The reference trajectory is a set of line segments defined by a series of waypoints. The trajectory is repeated three times. The two subplots show the top view and the side view of the trajectory tracking experiment. The coordinate frame is defined such that x points at the forward direction of the chassis, and z points upward. The visualization of the SAHA machine is for illustration only; the scale is not accurate.

The accompanying drawings show simplified representations of systems, or parts thereof, as involved in embodiments. Technical features depicted in the drawings are not necessarily to scale. Similar or functionally similar elements in the figures have been allocated the same numeral references, unless otherwise indicated.

Systems, computerized systems, methods, and computer program products, embodying the present invention will now be described, by way of non-limiting examples.

DETAILED DESCRIPTION OF EMBODIMENTS OF THE INVENTION

The following description is structured as follows. General embodiments and high-level variants are described in section 1. Section 2 addresses particularly preferred embodiments as well as experiments conducted to validate the present approach. Section 3 concerns technical implementation details.

## 1. General embodiments and high-level variants

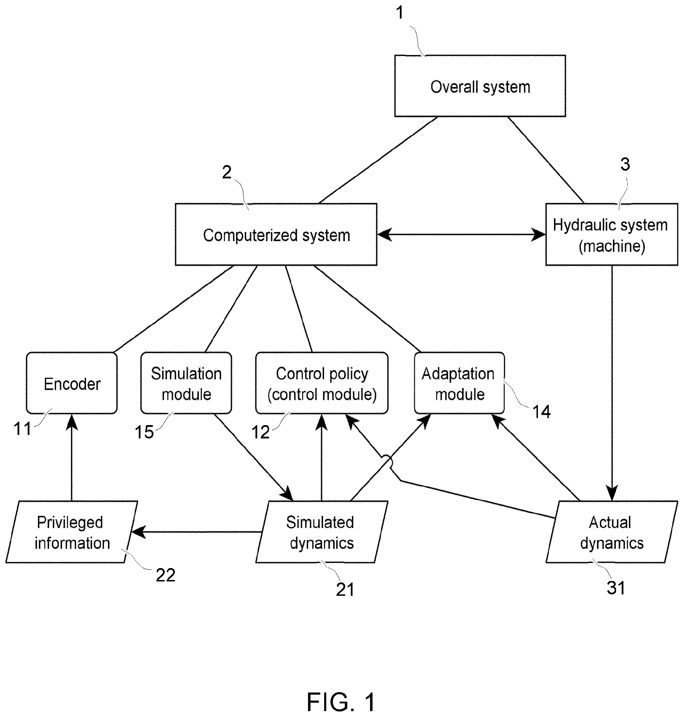

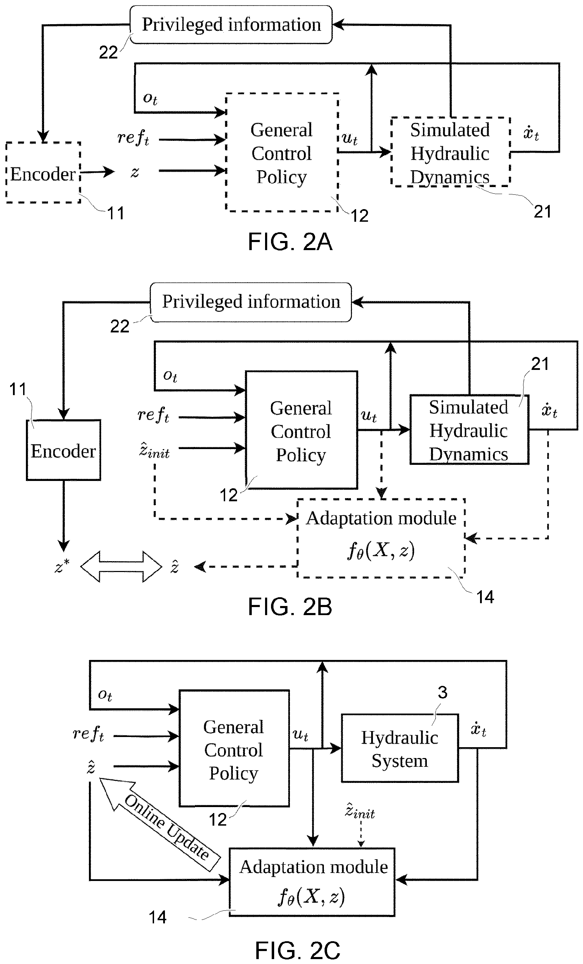

A first aspect of the invention concerns a computer-implemented method of controlling a given machine 3, e.g., a hydraulic machine. The machine 3 comprises one or more actuators, such as hydraulic actuators. The present method and its variants are sometimes collectively referred to as the "present methods" in this document. Such methods are described below in reference to FIGS. 1, 2A, 2B, and 2C. The present methods are typically implemented by a computerized system 2 (see the diagram of FIG. 1), which itself concerns another aspect of the invention.

### 1.1. Essential features, advantages

The method first requires loading a control module 12 and an adaptation module 14, typically in the main memory of the underlying computerized system 2. The control module 12 is assumed to have already been trained together with an encoder 11, based on dynamics observed for actuators of a set of machines, see FIG. 2A.

In detail, the encoder 11 has learned to generate a latent variable z for each actuator of each machine of this set, based on known dynamics 21 of each actuator (FIG. 2A). Such dynamics 21 are preferably obtained through simulation, as discussed below in detail. The dynamics 21 can for instance be efficiently captured by states of the actuators (e.g., positions $x_t$, speeds $\dot{x}_t$, accelerations $\ddot{x}_t$, or loads $p_t$, etc., at any time $t$) or by sequences of such states (e.g., $\dot{x}_{t-k}, \dot{x}_{t-k+1}, ..., \dot{x}_t$). In the examples of FIGS. 2A- 2C, the states of the actuators are assumed to be captured as speeds $\dot{x}_t$ only, for the sake of simplicity.

Complementarily to the encoder 11, the loaded control module 12 has learned to produce control signals $u_t$ to control each actuator based on its dynamics 21 and the latent variable $z$ as generated by the encoder 11, see FIG. 2A.

Moreover, the loaded adaptation module 14 is assumed to have been trained to estimate the latent variable (for each actuator) based, on the one hand, on the known dynamics 21 and, on the other hand, the control signals $u_t$ that the control module 12 has learned to produce, as assumed in FIG. 2B. Note, the latent variable $\hat{z}$ that the adaptation module 14 learns to estimate is an estimate of the latent variable as generated by the encoder 11 for training the adaptation module 14. This latent variable $\hat{z}$ can for instance strive to estimate the latent variable $z^*$ as specifically re-generated by the encoder 11 upon training the adaptation module 14, as depicted in FIG. 2B. That is, the latent variables $z^*$ may serve as labels for the adaptation module 14, as suggested by FIG. 2B. Depending on its actual implementation, the adaptation module 14 may further need initial estimates $\hat{Z}_{init}$ of the latent variables, as in embodiments discussed later.

The loaded modules 12, 14 are then used to adapt the controller to each actuator of a given machine and control a given machine 3, such as a hydraulic machine. Note, while the dynamics 21 are preferably simulated dynamics, the machine 3 is an actual, physical machine, meaning that the underlying system 2 must be able to interface with that machine 3.

In practice, the method includes an adaptation phase (see FIG. 2C), during which the control module 12 is run to produce initial control signals $u_t$. Such signals are applied to one or more actuators of the given machine 3, which gives rise to certain initial dynamics 31 of the actuators. The adaptation module 14 is concurrently run to estimate one or more latent variables $\hat{z}$ for the one or more actuators, respectively, as it has already learned to do. To that aim, the adaptation module 14 uses, on the one hand, the initial control signals $u_t$ as produced by the control module 12 and, on the other hand, data obtained from the initial dynamics 31 observed for each of the one or more actuators of the machine 3.

At the end of the adaptation phase, a new phase starts, which is referred to as a "normal operation phase" herein. During this phase, the machine 3 is controlled using latent variables $\hat{z}$ as estimated by the adaptation module 14 during the adaptation phase. That is, the actuators of this machine 3 are operated thanks to further control signals produced by the control module 12 based on the latent variables $\hat{z}$ estimated by the adaptation module 14. Note, each of the latent variables learned by the adaptation module 14 (FIG. 2B) and the latent variable as later inferred (FIG. 2C) by the adaptation module 14 is denoted by $\hat{z}$.

Comments are in order. The proposed solution involves both a control module 12 and an adaptation module 14 at runtime. In addition, an encoder 11 is needed during the training phase. Each of the encoder 11, control module 12, and adaptation module 14, relies on a machine learning (ML) computational model, which is assumed to have already been trained to produce desired values and signals (latent variables and control signals). The control signals $u_t$ typically consist of low-level commands, e.g., low-level valve commands, such as commands including valve setpoints, valve currents, and/or valve pulse width modulation (PWM) signals, as opposed to high-level valve commands such as positions, velocities, and pressures.

Each of the underlying models preferably involves an artificial neural network (ANN). Examples of ANN architectures that can be involved in the modules 11, 12, 14 include multilayer perceptrons (MLPs), convolutional neural networks (CNNs), recurrent neural networks (RNNs), variational autoencoders (VAEs), to cite a few. Once loaded, the models 12, 14 are ready to execute for inferencing purposes, as needed during the adaptation phase and normal operation phase.

The underlying idea is to rely on complementarily trained modules 11, 12, 14, which allow to efficiently customize the control module 12 at runtime. Namely, the encoder 11 has learned to generate a latent variable for each actuator of the machine 3, where each latent variable encodes dynamics of a respective actuator of the machine 3 to be controlled. Each latent variable is a vector, i.e., an array of numbers representing such dynamics, in a compressed manner. In other words, the encoder compresses data obtained from the dynamics of the actuators. To that extent, the latent variables are digital footprints of their respective actuators, where such digital footprints have a semantic meaning (unlike mere hashes). That is, two actuators having very close dynamics 21 will normally be encoded as vectors that are very close in the output space of the encoder. This encoder can for instance be implemented as an MLP, or involve both a CNN and an MLP, as in particularly preferred embodiments discussed in section 2. The encoder 11 may for instance compress data obtained from the dynamics 21 into a low-dimensional vector (i.e., forming the latent variable z), which typically include between 12 and 32 vector components.

Thus, each latent variable plays the role of a semantic, digital footprint of the respective actuator, based on which the control module 12 may produce optimal control signals to operate this actuator. Again, the control module 12 has already learned to produce such signals based on latent variables as initially generated by the encoder 11. Thus, the control module 12 is conditioned on latent variables, which are determined by the adaptation module 14 for each actuator of the machine 3 during the adaptation phase. This makes it possible to customize the control module 12 to any particular machine upon deployment. I.e., during the adaptation phase, the adaptation module 14 is used to estimate or refine a latent variable $\hat{z}$ for any actuator of a given machine 3, allowing an adaptive operation by the control module 12. Therefore, as one understands, the present approach enables a universal control module 12, i.e., a control module that can be customized to a variety of actual machines, in operation. The control module is also referred to as a "control policy," a "general control policy," or even "controller" in this document.

### 1.2. Adaptive operation of the control module and adaptation module

Furthermore, the steps of running the control module 12 and running the adaptation module 14 are preferably interlaced, so as to progressively refine the latent variables $\hat{z}$. Practically speaking, this means that the latent variables $\hat{z}$ are repeatedly estimated and refined by the adaptation module 14. I.e., the adaptation phase may include several algorithmic steps. The other way around, the adaptation phase and normal operation phase can be regarded as being intertwined. In this case, the control module 12 is adaptively run based on the latent variables as repeatedly estimated by the adaptation module 14. In other words, the adaptation module 14 successively refines the latent variable for any actuator of the machine 3, such that the machine 3 can be operated based on successively refined latent variables. Thus, the control module 12 can be adaptively run as a function of the progressively refined latent variables. And this can be exploited to continuously refine the performance of the control module with data collected during operation, such that slow variations in the machine dynamics due to aging, temperature changes, etc., can be compensated seamlessly.

### 1.3. Application to hydraulic machinery

In principle, the present methods can be used to control a variety of machines. However, such methods are preferably applied to hydraulic machinery. Again, the control module 12 can be trained based on measurable properties obtained from the dynamics 21. During the adaptation phase, the initial control signals produced by the control module 12 result in certain properties of the actuators, which are observed and leveraged by the adaptation module 14 to estimate or refine the latent variables. The adaptation module 14 may for instance adapt to actual target hydraulic actuator properties such as friction and delay. The collected data may for instance consist of hydraulic actuator positions, speeds, and/or chamber pressures.

### 1.4. Training

The method steps described so far focus on the adaptation and normal operation phases. However, the present methods may further include preliminary training steps, as assumed in FIGS. 2A and 2B. As noted earlier, such steps may be performed by the underlying computerized system 2 or by another computerized system. As seen in FIG. 2A, the encoder 11 is trained with the control module 12 to generate latent variables z based on dynamics 21 of the actuators, preferably based on a response 22 of the actuator system as obtained from said dynamics 21. The control module 12 is trained to produce control signals $u_t$ based on such dynamics 21 and the latent variable z. Note, the data extracted from the dynamics 21 reflects a dynamic environment. Thus, the training of the control module 12 can be regarded as a reinforcement learning process, the goal of which is to maximize a long-term reward, as in preferred embodiments described in section 2.

One option is to use a teacher-policy to train the encoder 11. Alternatively, the latent variables can be obtained using a variational autoencoder (VAE), and then used to train the control module 12. And, again, the adaptation module 14 is additionally trained to estimate the latent variable for each actuator of each machine considered. For example, each of the encoder and decoder involved in the VAE may be implemented as an MLP.

### 1.5. Simulations

In principle, the modules 11, 12, 14 can be trained based on dynamics observed for actuators of a set of actual physical machines. Preferably, however, the control module 12 is trained in simulation. Simulations may notably be based on kinematic and/or dynamic properties of the actuators, such as load/pressure properties of hydraulic cylinders. In that case, the encoder 11 is trained together with the control model 12 to learn to produce meaningful latent variables for the actuators based on the simulated actuator dynamics 21. Likewise, the adaptation module 14 is trained on simulated data to be able estimate a latent variable for any actuator of each machine of a set of machines. An advantage of using simulations is that a very large number of machines and corresponding actuators can be taken into account for training purposes. In other words, the encoder 11 may potentially use a very large spectrum of data obtained from the simulated dynamics. Thus, the configuration space enabled by simulations can potentially be very large, i.e., sufficiently large to make sure that suitable latent variables can later be generated at runtime to customize the control module 12.

### 1.6. Input datasets

In principle, the encoder 11, the control module 12, and the adaptation module 14, may all be trained based on the same data obtained from the simulated dynamics 21. However, they preferably use different input datasets. For example, the encoder 11 may use an exhaustive dataset 22 as input, where this dataset may comprise both, properties that are measurable on the real machine, and properties that are exclusively available in, or obtainable from, the simulation, e.g., parameters used to simulate the actuator dynamics 21. A preferred implementation in one in which the encoder 11 relies on the actuator's response 22 from the simulated dynamics 21, as assumed in FIGS. 2A and 2B. This point is further discussed in section 2.

Conversely, the control module 12 and the adaptation module 14 may rely on a smaller amount of data, e.g., consisting of measurable properties obtained from the simulated dynamics. In principle, the adaptation module 14 may rely on measurements of physical properties obtained from the simulated dynamics of the actuators. Likewise, the control module 12 may (learn to) produce control signals based on physical properties as estimated for each actuator from the simulated dynamics 21. During the adaptation phase, the adaptation module uses actual measurements to estimate the latent variables and adapt to the real actuators of the specific machine 3.

In other words, the encoder 11 may use privileged information, i.e., information that is not made available to the adaptation module 14 and the control module 12, on purpose, as such information will not be available from real machines 3 at runtime. During training, the computerized system 2 can access parameters of the system dynamics 21 and easily generate a large number of measurements for training the encoder 11. This has no impact on the runtime operation. Conversely, the input datasets used by the control module 12 and the adaptation module 14 preferably have a lower dimension, which also means that a reduced number of sensors are required on the real machine 3. Still, the input datasets used by the control module 12 and the adaptation module 14 preferably differ, as apparent from FIGS. 2B and 2C. This point is further discussed below and in section 2. Note, although input datasets used by the adaptation module 14 and the encoder 11 differ, they ideally encode the same (or substantially the same) information, from a semantic point-of-view, so as for the adaptation module 14 to be able to faithfully reconstruct the encoder's latent variable.

### 1.7. Examples of application

In FIGS. 2A- 2C, the dynamics 21 used for training are simulated for each actuator of each machine of a set of hydraulic machines (each hydraulic machine may comprise one or more actuators). Examples of such actuators include boom cylinders, bucket cylinders, stick cylinders, hydraulic motors, such as slew/turn motors of excavators, or other hydraulic machines, such as material handling cranes or forestry machines. Simulations can be based on kinematic and/or dynamic properties of the actuators (e.g., load/pressure properties of hydraulic cylinders, as noted above). The adaptation module 14 may for instance adapt to target hydraulic actuator movements. The collected data may include a hydraulic actuator position $x_t$, a hydraulic actuator speed $\dot{x}_t$, and/or hydraulic chamber pressures.

To summarize, the control module 12 may be trained purely in simulation and adapted to the actual dynamics of a particular system, which is typically achieved within seconds to minutes. This allows for quick and precise actuation for any machine 3 after the adaptation. The proposed approach simplifies the modelling and control design effort in machinery automations, in particular hydraulic machinery automations. This approach was tested and validated through a series of experiments, as discussed in section 2. In particular, it was validated by testing a single controller adapted to eight actuators of two hydraulic machines that are distinctly different in size, application, and age. The results show control performance comparable to previous methods that rely on machine-specific data and training or manual calibration.

### 1.8. Preferred implementation of the adaptation module and control module

In embodiments, the adaptation module 14 further uses initial estimates $\hat{Z}_{init}$ of the one or more latent variables, whether during the training phase or the adaptation phase, as reflected in FIGS. 2B and 2C. The module 14 may for instance rely on initial estimates or guesses of the latent variables. Note, an additional computational model (e.g., neural network) could be used to estimate the initial vector for each actuator based on high-level data such as the machine type and numbers of actuators. In variants, the adaptation module may use a default, initial value of the latent variable, i.e., initial random vectors.

In addition, the control module 12 preferably takes as input a history $o_t$ of input-output observations for each actuator, where this history $o_t$ built based on inputs to the dynamics (simulated or real) provided by the control module itself and the outcomes of the dynamics (simulated or real) . Namely, each input-output pair of these input-output observations consists of: (i) output signals $u_{t-1}$ produced by the control module 12 at a given time $t$ - 1; and (ii) states $\dot{x}_t$ of each actuator as obtained in response to applying such output signals, assuming each state considered boil down to a mere speed $\dot{x}$ of an actuator, as discussed earlier. The same scheme is used during the training. The history $o_t$ may for instance form a sequence $o_t = [\dot{x}_t, u_{t-1}, \dot{x}_{t-1}, u_{t-2}, \ldots, \dot{x}_{t-k+1}, u_{t-k}]$, which represents a short history of the system's input-output observations.

Moreover, the control module 12 may further take as input a reference of future desired states $ref_t$ for each actuator. The reference of future states, also called lookahead, corresponds to target states to be achieved in the future, e.g., $$ref_t = [\dot{x}_t^*, \dot{x}_{t+1}^*, \ldots, \dot{x}_{t+N}^*]$$ . Of course, other implementations can be contemplated, which may additionally take into account positions and accelerations, or pressures/loads of cylinders, for example.

The control module 12 can for instance be represented by an MLP (a fully connected, multi-layer ANN) with hidden layer dimensions [64, 32], which takes as input $o_t$, $ref_t$, and $z$, as assumed in FIGS. 2A- 2C. The encoder 11 can for example be represented by a CNN or MLP and receive privileged information from the dynamics as input. For completeness, The adaptation module 14 is preferably represented by an MLP that takes a concatenated vector of $[o_t, u_t, \dot{x}_{t+1}, z]$ as input and predicts an energy value $f_\theta (o_t, u_t, \dot{x}_{t+1}, z)$, where $\theta$ is the network parameter. The function $f_\theta$ may for instance be trained to be minimized when the latent variable approaches that of the simulated system, such that the latent variable can be updated online by minimizing $f_\theta$, as suggested in FIG. 2C. This is further discussed in section 2. Still, other implementations can be contemplated, where, for example, the control module 12 is represented by an RNN. Similarly, other ANN architectures can be used to represent the encoder 11 and the adaptation module 14.

### 1.9. Computerized system and computer program products

Another aspect of the invention concerns a computerized system 2, see FIG. 1. As usual, the system 2 may include processing means and a memory, which may store computerized methods in the form of software. In addition, the system 2 includes interface means to interface with the machine 3, preferably wirelessly (see section 3).

Consistently with the present methods, the system 2 is notably configured to load a trained control module 12 and a trained adaptation module 14, e.g., in the main memory of the system 2. The system 2 is further configured to run the control module 12 and the adaptation module 14, to estimate latent variables, and accordingly produce control signals to operate actuators of a given machine 3. As noted earlier, the computerized system 2 may further be configured to run the control module 12 and the adaptation module 14 in an interlaced manner, so as to adaptively run the control module 12 based on repeatedly refined latent variables. Furthermore, the computerized system 2 may be further configured to simulate 15 dynamics 21 of machine actuators and accordingly train the modules 11, 12, 14.

A related aspect of the invention concerns a computer program product, which comprises a computer readable storage medium having program instructions embodied therewith, where the program instructions are executable by processing means of a computerized system 2 to cause the latter to perform the steps as described above in reference to the present methods. Additional features of the present computerized system 2 and computer program product are discussed in section 3.

### 1.10. Overall system

A further aspect of the invention concerns a general system 1, see FIG. 1, which comprises a computerized system 2 as described above, as well as a given machine 3, where the computerized system 2 is interfaced with the given machine 3, to adapt to and operate the latter. This machine may for instance be a hydraulic machine 3, as exemplified above. The system 1 may further include one or more additional computers, be it to train the computational models 11, 12, 14. The example of FIG. 1 assumes that the computer system 2 used at runtime is also used for training purposes. To that aim, this system 2 can further run a simulation module 15.

The above embodiments have been succinctly described in reference to the accompanying drawings and may accommodate a number of variants. Several combinations of the above features may be contemplated. Examples are given in the next section.

**2. Particularly preferred embodiments**

The following describes particularly preferred embodiments as captured in the accompanying drawings.

**2.1. Overview**

The proposed method involves training a universal controller for hydraulic cylinders in a simulation environment of simplified hydraulic actuator models. The controller is then deployed on different machines. The online adaptation of the controller to specific cylinder dynamics is carried out on each cylinder. After a short adaptation phase, the control module (also referred to as controller in the following) can be used for precise motion control. Two hydraulic machines are used in the experiments: a walking excavator and a tree harvester.

In more detail, the following discusses a learning-based adaptive controller for hydraulic cylinders on heavy machinery that is trained purely in simulation and can adapt to real machines rapidly when deployed. Using a first-principle model of hydraulic cylinders, we simulate a large variety of nonlinear valve and cylinder dynamics. Then, Reinforcement Learning (RL) is used to train a controller that handles the different cylinder dynamics conditioned on a latent variable that encodes the system dynamics. During online deployment, we use an energy-function-based adaptation module to update the estimated latent parameter iteratively. We use the proposed method to train one universal controller and evaluate its performance in both simulation and real-world experiments on two machines that are very different in size, application, and age. When combined with a simple kinematic controller, the proposed method shows accuracy in end-effector tracking tasks comparable to existing methods that require machine-specific data for offline training or manual controller parameter calibration. The following arguably captures the first demonstration of a generalizable controller for hydraulic cylinders and opens up new possibilities for effortless and ubiquitous automation of hydraulic machinery.

**2.2. Methodology**

FIGS. 2A - 2C show an overview of the proposed method. We control hydraulic cylinders 3 with an ANN policy 12 that tracks cylinder velocity commands. During training, we simulate the dynamics 21 based on the first-principle model of the hydraulic actuators and heavily randomize the parameters. In addition to system state and reference velocities, the control policy 12 also takes as input a latent variable z encoding the system dynamics. After obtaining the control policy 12, we train an adaptation module 14 to estimate the latent variable using data that can be measured online. The adaptation module 14 uses an energy-based model [11] that takes recent observations of the system 3 and a current estimation of the latent variable as input, and it is trained to predict lower energy value for a latent variable that matches the observations. During online adaptation on real systems, the gradient of the energy function is used to update the latent estimation online.

*2.2.1. Simulation environment*

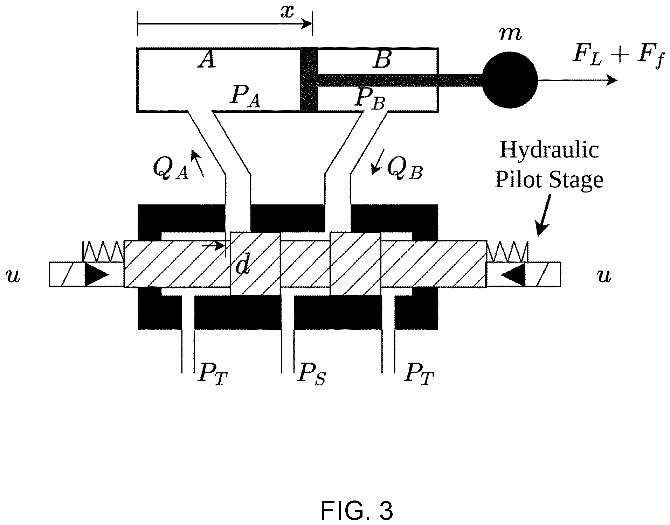

For modern hydraulic machinery with load sensing systems and electrical pilot stages, a reduced-order model can be used to approximate the dynamics. FIG. 3 shows the diagram of a hydraulic cylinder on heavy machinery. The input to the hydraulic cylinder $u$ is the current command to the solenoid valve that controls the pilot stage. The pilot stage moves the valve of the main stage, creating an orifice of size $d$, allowing oil flow between the pressure source and the piston. Following the simplifications in [12], we assume a closed hydraulic circuit, i.e. $Q_L = Q_A = Q_B$, and use the average effective piston area $\overline{A}$ and total hydraulic cylinder volume $V_t$. The valve and piston dynamics can be described by the following ordinary differential equations (ODEs):

$$Q_L = dK\sqrt{P_S - P_T - \text{sgn}(d)P_L} \qquad (1)$$

$$\dot{P}_L = \frac{4E}{V_T}\left(Q_L - \bar{A}\dot{x}\right) \qquad (2)$$

$$\ddot{x} = \frac{1}{m}\left(\bar{A}P_L + F_L + F_f\right) \qquad (3)$$

In these equations, where $P_L = P_A - P_B$ is the load pressure and $F_f$ the friction force. The mass $m$ models the effective mass of the piston and attached mechanical structure, of which the inertias of the rotating parts are projected as masses on the cylinder. $F_L$ consists of all external force projected to the piston. $P_S$ and $P_T$ are the source and tank pressure, respectively. The source pressure is regulated by the load sensing system based on load pressure measurements, such that $\sqrt{P_S - P_T - \mathrm{sgn}(d)P_L}$ remains constant. In this case, the reduced-order dynamics from $d$ to $x$ is described by the following second-order system:

$$m\ddot{x} = \frac{4E\bar{A}}{V_T}K'd - \frac{4E\bar{A}^2}{V_T}\dot{x} + \dot{F}_L + \dot{F}_f, \quad (4)$$

in which $K'$ is the effective valve gain under load sensing.

On the tested machines in this work, the varying effective masses on the cylinders cause less than 30% change on system (4)'s eigenfrequency from the value at the nominal configuration. Therefore, we ignore the influence of varying effective mass $m$ between different machine configurations and consider $m$ constant for each actuator, although this assumption does not hold if a payload with large inertia is considered. The ODE in (4) also shows that only the time derivative of the external force $F_L$ and friction force $F_f$ affect the dynamics when starting from a static state. As we do not expect hydraulic machines to perform rapid motion while requiring high accuracy, we assume the velocity and acceleration of the cylinders are both low. Therefore, $F_L$ caused by the gravity of the mechanical structure attached to the cylinder only slowly varies over time. With randomized disturbance added to the input during simulation, we expect the controller to be robust to these changes under slow operation. We consider a simple friction model $F_f = -\mu \dot{x} - F_s \mathrm{sgn}(\dot{x})$, where $\mu$ is the damping coefficient and $F_s$ the static friction. While a more complex friction model could be more accurate, we found the simple model sufficient as the most significant influence of friction occurs only when the static friction abruptly changes direction.

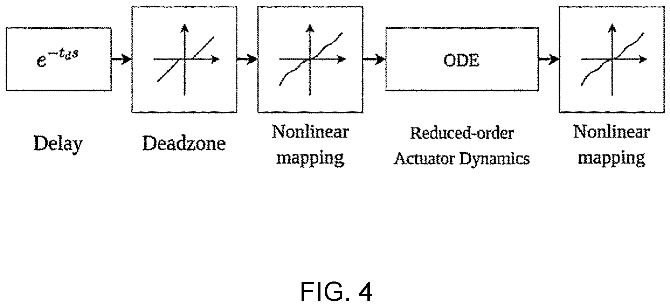

The pilot stage dynamics have a similar form. However, as the pilot stage only drives the main stage valve, the oil flow is much smaller. Therefore, we assume that the pilot stage dynamics are much faster than the main stage dynamics and simulate the dynamics from $u$ to $d$ with a time delay and a dead zone. Finally, we add nonlinear mappings into the dynamics to simulate the nonlinearities caused by the valve in real-world systems. The nonlinear mappings are represented by piecewise linear functions with random positive slopes and added before and after the ODE system (4), similar to [3]. The monotonicity assumption is valid as the steady-state response should be monotonically increasing. The full model we used to train the controller in simulation is shown in FIG. 4.

The parameters in the simulated model are randomized to represent various real-world systems. Specifically, we randomize the time of input delay, positive and negative dead zones, the slopes of the piecewise linear mappings, parameters in the linear system, as well as friction parameters. Based on prior experience with the autonomous excavator HEAP [1], we select the range of input delay up to 0.6s, and dead zones up to 25% of the full input range. Later, we show that the developed controller is generalizable by testing it on another machine.

### 2.2.2. Control policy (i.e., control module)

The control policy is trained in simulation to control various hydraulic actuators conditioning on a latent encoding of the system dynamics. We achieved this by training a latent variable encoder at the same time. The control policy, represented by a multi-layer perceptron (MLP) with hidden layer dimensions [64, 32], takes an input consisting of three parts: $o_t$, $ref_t$, and $z$, where $o_t = [\dot{x}_t, u_{t-1}, \dot{x}_{t-1}, u_{t-2}, ..., \dot{x}_{t-k+1}, u_{t-k}]$ is a short history of the system's input-output observations, while $ref_t = [\dot{x}_t^*, \dot{x}_{t+1}^*, ..., \dot{x}_{t+N}^*]$ is a lookahead of the desired cylinder velocity. The memory and lookahead can compensate for the randomized time delay in the system, and parameters $k$ and $N$ are selected to cover the maximum delay time we sampled in the simulation environment. The latent variable $z$ used by the control policy is computed once for each random hydraulic model. After sampling the parameter set for each environment, we compute the steady state response of the system to a set of constant inputs $u$ = -1.0, -0.9, ..., 0.9, 1.0 and concatenate them with the transient response of the system to step and sinusoidal inputs at varying amplitudes and frequencies. This information is fed through the latent variable encoder to obtain a 16-dimensional latent variable $z$. The latent variable encoder first processes the transient response signals with a small convolutional neural network (CNN). The output of the CNN is then concatenated with the steady-state response and fed through an MLP with hidden layer dimensions [96, 64].

During training, random velocity references are generated. The reference velocity consists of constant velocity commands and ramps with constant accelerations. The acceleration is resampled every second from a uniform distribution with maximum and minimum values scaled by the relative gains of the simulated system. The reward function for the training is defined as:

$$r_k = r_{\dot{x}} + r_{\ddot{x}} + r_u, \qquad (5)$$

where

$$r_{\dot{x}} = 0.5 \exp(-40\|\dot{x}_k - \dot{x}_k^*\|^2), \qquad (6)$$

$$r_{\ddot{x}} = 0.2 \exp(-5\|\dot{x}_k - \dot{x}_{k-1} - \dot{x}_k^* - \dot{x}_{k-1}^*\|^2), \qquad (7)$$

$$r_u = 0.1 \exp(-2\|u_k - u_{k-1}\|^2). \qquad (8)$$

In the above equations, $\dot{x}_k$ is the cylinder velocity at time step $k$, and $\dot{x}_k^*$ is the reference velocity at time step $k$. The three terms in the reward function encourage velocity tracking, acceleration tracking, and smoothness of the control input, respectively.

We train the control policy 12 and the latent variable encoder 11 as a whole with RL. The Proximal Policy Optimization (PPO) [13] algorithm with Generalized Advantage Estimation (GAE) [14] is used. Parallelized simulation was used to speed up the training and collect data from diverse environments.

### 2.2.3. Adaptation module

The privileged information used by the latent variable encoder requires significant efforts to obtain on a real machine.

A series of experiments with different control inputs have to be conducted. Some of them are not always possible due to the physical limits of a hydraulic machine. Therefore, we use an energy-based adaptation module to estimate the latent variable at runtime using online-collected data. We have selected the energy-based modelling approach to estimate the latent variable because the latent variable should encode the dynamics of actuators, which is time-invariant. Therefore, during online deployment, the latent can be continuously updated until a minimum is found.

The adaptation module is a neural network that takes as input a concatenated vector of $[o_t, u_t, \dot{x}_{t+1}, z]$ and predicts an energy value $f_\theta(o_t, u_t, \dot{x}_{t+1}, z)$, where $\theta$ is the network parameter. The energy function is trained to be minimized when the latent variable is close to that of the simulated system, such that the latent variable can be updated online by gradient descent on the energy function. To train the energy function, we use Algorithm 1 below.

---
**Algorithm 1** Adaptation module training

---
**for** $i \leftarrow 1, \ldots, N_{iterations}$ **do**
   Sample $N_{envs}$ systems
   Compute $z_1^*, \ldots, z_{N_{envs}}^*$          $\triangleright$ With trained encoder
   Collect $o_t^j, u_t^j, \dot{x}_{t+1}^j$
       $\hookrightarrow$ for $j = 1, \ldots, N_{envs}, t = 1, \ldots, T$
   Sample $z_1^0, \ldots, z_{N_{envs}}^0$
   **for** $j \leftarrow 1, \ldots, N_{steps}$ **do**
      **for** $k \leftarrow 1, \ldots, N_{envs}$ **do**
         $z_k^j \leftarrow z_k^{j-1} - \gamma \nabla_z \left[ \sum_t f_\theta(o_t, u_t, \dot{x}_{t+1}, z_k^{j-1}) \right]$
      **end for**
   **end for**
   $\theta \leftarrow \theta - \alpha \nabla_\theta \left[ \sum_k \|z_k^* - z_k^{N_{steps}}\|^2 \right]$
**end for**

---

During each parameter update of the function $f_\theta$, we sample $N_{envs}$ systems from the simulation environment and compute $z^*$ for each of them using the trained encoder. Then, we collect rollouts of $T$ steps on each system. With the collected data, $N_{steps}$ steps of gradient descent on the latent variable are performed to minimize the energy function, starting from a random guess. The loss is computed as the distance between the updated latent estimation to the ground truth *z\** and used to update $\theta$. We structurally constrained the energy function to be convex with respect to *z* using the method proposed in [15]. We also found this constraint helpful in making the energy function conservative when fitting the multi-modal data. As the data we fed into the energy function is from a short period of simulation, there could exist multiple local minima in the *z* space that correspond to the same observed data. In these cases, constraining the energy function to be convex forces it to be conservative when the data is not sufficient to distinguish the system dynamics.

We selected hyperparameters $N_{env}$ = 3000, $T$ = 200, $N_{steps}$ = 5, $\gamma$ = 1.5 *e* - 4, $\alpha$ = *2e* - 3 and $N_{iterations}$ = 2400. During online deployment, we perform the gradient evaluation on a short history of data every 1 s, i.e.,

$$\hat{z}_t \leftarrow \hat{z}_{t-1} - \gamma \nabla_z \left( \Sigma_{\tau \in [t-16, t]} f_\theta (o_\tau, u_\tau, \dot{x}_{\tau+1}, \hat{z}_{t-1}) \right). (9)$$

### 2.3. Simulation result

The performance of the proposed method is first evaluated in simulation. We use both the simplified model used in training and an ANN model trained from extensive experimental data. During the evaluations, we initialize the latent variable estimation at its empirical mean from the randomized training stages. While the controller predicts control commands at every time step, a separate thread records the data and periodically updates the latent variable estimation. In the simulation, we use a combination of steps, ramp signals, and modulated sinusoids as the reference signal. Varying magnitude and frequencies of the reference signal are used during the adaptation.

#### 2.3.1. Simulated system model

FIGS. 5A - 5C show the performance of the proposed controller in an example of the simulated systems. FIG. 5A shows that in the beginning, the tracking performance is poor because the system dynamics are randomly sampled. During the 2-minute adaptation, a reference signal consisting of steps, ramps, and sinusoids with varying magnitude and frequencies, as shown in FIG. 5B, is applied to the system. With the observed data, the latent variable estimation gets closer to the ground truth as shown in FIG. 5C. Finally, the tracking performance has improved significantly in the right half of FIG. 5A.

#### 2.3.2. Actuator network

We tested the proposed method on the actuator network taken from [2], a system resembling an actual hydraulic machine. The actuator network is trained to predict the cylinder dynamics of the four boom cylinders on HEAP. The model is a 4-layer MLP and captures complex effects on a real hydraulic machine, and controllers tested on this model have been successfully transferred to the machine.

We perform the same test as in section 2.3.1. FIG. 6 shows the tracking performance of the proposed controller on the actuator network before and after adaptation. Similar to the previous result, the proposed controller can adapt to the system and largely improve the tracking performance. This result suggests that the proposed model in section 2.2.1 is a good abstraction of more complex hydraulic dynamics, and the adaptive controller trained on this model can be applied to real hydraulic machines.

We also compare the performance of the adaptive controller with another controller trained using Domain Randomization (DR). The controller is trained with the same randomized environment, but the policy does not depend on the latent variable. The cylinder velocity tracking performance is plotted in the right half of FIG. 6 for a comparison with the adapted controller. Compared to the controller trained with DR, the proposed controller has a lower RMS tracking error on all four cylinders. The level of improvement is from 17.5% on the boom cylinder to 59.7% on the pitch cylinder. As the DR controller does not have implicit knowledge of the actuator dynamics, it cannot generate a good feedforward input for the system and rely heavily on feedback control. This leads to the temporal offset, overshooting, and oscillation in reference tracking, particularly in the telescopic and pitch cylinders. These effects lead to bigger oscillations on the end-effector when all cylinders are used co-ordinately. Thus, it is not possible to use the DR controller for precise motion control.

### 2.4. Experimental results

We perform the real-world experiments on two different machines, namely the autonomous excavator HEAP [1], and the automated tree harvester SAHA (Supervised Autonomous HArvester) [16]. On each machine, we first perform the adaptation on the cylinders and then test the adapted controller in end-effector trajectory following tasks resembling real-world operations.

During the adaptation phase, each joint is commanded to follow ramp signals and modulated sinusoids with different frequencies and amplitudes. A human operator can supervise this process to adjust the references with safety considerations of the machine kinematics. The adaptation is stopped once the control performance stops improving, and the latent estimation converges. The adaptation is performed on each joint individually also for safety reasons.

In the end-effector control experiments, each joint is controlled independently by one instance of the proposed controller with the adapted latent variable. The user commands a reference trajectory, and Inverse Kinematics (IK) is used to map the reference trajectories to cylinder space. The velocity reference of each cylinder controller consists of a feedforward part from the trajectory and a feedback command from a PID controller tracking cylinder position. To guarantee the continuity of the reference velocity, the reference trajectory always consists of an acceleration phase to a constant reference velocity at the beginning and a constant deceleration phase at the end.

### 2.4.1. HEAP

On the excavator HEAP, the proposed cylinder velocity controller adapts to the dynamics of the arm actuators on the real machine within 10 minutes. The adapted cylinder controller performance is shown in FIG. 7. It can be observed that the cylinder controller can track the reference velocity well despite small mismatches at the peaks of the reference velocities. The friction on the real machine is also significant, indicated by the sudden accelerations when the cylinder velocity crosses zero.

The cylinder controller also performs decently well when all the cylinders are used simultaneously. FIGS. 8A, 8B show an experiment in which a circular reference trajectory is tracked with the shovel edge of HEAP using the proposed method. With the high performance of the cylinder controller, the mean end-effector trajectory tracking error over the trajectory shown in FIG. 8A reaches 4.1cm, which is comparable to the previous work on the same machine [2].

A series of horizontal straight-line tracking experiments at different heights and reference velocities were performed, and we computed the same performance metrics as used in [2] for comparison. Some of the tracked trajectories on the machine are plotted in FIG. 9. The error is computed and listed in Table I below, together with the values from previous work.

Table I: Error calculation for the straight-line tracking experiment and comparison with a commercial grading system. The data of the benchmark methods is taken from [2].

| Metric | Proposed | | Egli & Hutter[6] | | Commercial |
|---|---|---|---|---|---|
| | Slow | Fast | Slow | Fast | Fast |
| $v^{avg}$ [cm/s] | 13.04 | 20.00 | 13.1 | 18.3 | 16.3 |
| $v^{max}$ [cm/s] | 15.00 | 25.00 | 24.9 | 35.1 | 40.9 |
| $|e_p|^{avg}$ [cm] | 0.69 | 1.16 | 0.8 | 0.9 | 1.8 |
| $|e_p|^{max}$ [cm] | 3.73 | 5.91 | 1.7 | 2.2 | 4.2 |
| $|\dot{\theta}|^{avg}$[rad/s] | 0.004 | 0.007 | 0.010 | 0.012 | 0.015 |
| $|\dot{\theta}|^{max}$[rad/s] | 0.033 | 0.046 | 0.030 | 0.041 | 0.046 |

In Table I, v is the velocity of the reference trajectory, $e_p$ the path deviation, and $\dot{\theta}$ the end-effector angular rate. Despite some differences in the experimental setup, the data suggest that the proposed controller can reach tracking accuracy comparable to that of the benchmark methods. The mean path deviation of the proposed method outperforms the commercial solution and even the controller trained on the actuator network at a slow speed. The shovel angle tracking using the proposed method is also clearly better than the benchmark methods. The maximum path deviation using the proposed method is higher than that using the controller trained on the actuator network, but it is still at a similar level as the accuracy of the commercial solution. FIG. 9 suggests it mostly comes from the larger position error at the beginning of the trajectory. This can be explained by the fact that we control each cylinder independently in the experiment, and it can be further improved with a high-level controller that uses all actuators co-ordinately.

The present method also works in the presence of ground interaction. FIG. 10 shows a grading experiment on HEAP, where the reference trajectory is a straight line around 5 cm beneath an uneven ground surface. An average trajectory tracking error at 3.62 cm was reached, while the average deviation from the straight-line path is 3.38 cm. This level of accuracy is sufficient for practical grading tasks. The proposed method, however, does not work for excavation tasks or grading with higher ground penetration. In these tasks, the ground interaction force grows rapidly. This effect dominates the dynamics in (4), and the assumption on slowly varying $F_L$ is no longer valid. In addition, the rapidly changing load force also causes the load sensing system not to act perfectly, which further deteriorates the performance of the proposed method.

*2.4.2. SAHA*

SAHA is a 4.5-ton small forest machine retrofitted recently with sensors and control interfaces for robotic precision forestry. To validate the capability of the proposed controller to generalize on different machines, similar experiments were repeated on SAHA. We used the exact same trained controller that has been successfully deployed on HEAP. As forest machines are equipped with passively suspended end-effectors, we only consider the arm up to the last controllable joint when performing task-space control.

We performed the same adaptation process on the SAHA machine, which took about 8 minutes until the cylinder controller could effectively track the reference velocities. After that, we performed end-effector trajectory tracking experiments on the arm of SAHA. We selected a trajectory that involves line segments through a set of waypoints in front of the chassis, initiating the action of reaching out to different trees in a forestry operation. FIG. 12 shows the performance with 0.6 ms$^{-1}$ reference velocity and 0.3 cm/s$^2$ acceleration. The average position tracking error is 5.39 cm. The higher tracking error on SAHA is unavoidable as the machine is older with outdated hydraulic components and significant backlash. The passively suspended end-effector also introduces a changing load force to the system, which potentially leads to a higher tracking error. Despite the less accurate trajectory tracking, the controller still steers the arm to the waypoints accurately. The result on SAHA shows the excellent generalizability of the controller trained with the proposed method. Thanks to the adaptation process, the same controller can be conveniently deployed on machines with very different actuator designs for different tasks.

## 2.5. Final remarks

The present section discusses a method to train adaptive learning-based controllers for the automation of hydraulic machinery. Through training in a randomized simulation with simplified hydraulic dynamics, the resulting controller can be adapted to different real systems within minutes. The accuracy of the adapted controller is comparable with the controller trained with a machine-specific actuator model and is adequate for many applications. Through the test on multiple machines, we show the excellent capability of the proposed method to automate multiple machines with the same controller. We believe the proposed method has great value in the automation of hydraulic machinery, as machine operators can easily adapt the controller to their systems without expert knowledge.

Further improvements can be contemplated. Pressure sensors on hydraulic machines provide additional observation of the system state at a reasonable cost. As the actuator dynamics can be dependent on the load conditions pump output, the additional measurement of cylinder and pump pressures can be used to improve the model in this work. This would enable the use of the adaptive controller to perform more diverse tasks including excavation, as done in [3] for a single machine. As noted in section 1, the proposed pipeline can be applied to continuously refine the performance of the control policy with data collected during operation, such that slow variations in the machine dynamics due to aging, temperature changes, etc., can be compensated seamlessly. For this, long-term evaluations need to be carried out, and the method can be improved to handle data from real operations, which can be biased since it does not excite the actuators at different modes. Finally, the adaptation capability of the current method is still limited by randomization during training. To overcome this limitation, online learning can be applied to build controllers that can adapt to a broader range of systems.

## 3. Technical implementation details

Computerized devices can be suitably designed for implementing embodiments of the present invention as described herein. In that respect, it can be appreciated that the methods described herein are at least partly non-interactive, i.e., automated. Automated parts of such methods can be implemented in software, hardware, or a combination thereof. In exemplary embodiments, automated parts of the methods described herein are implemented in software, as a service or an executable program (e.g., an application), the latter executed by suitable digital processing devices.

A typical computerized system 2, device, or unit, may include a processor and a memory (possibly including several memory units) coupled to one or more memory controllers. The processor is a hardware device for executing software, as e.g., loaded in a main memory of the device. The processor, which may in fact comprise one or more processing units, can be any custom made or commercially available processor.

The memory typically includes a combination of volatile memory elements (e.g., random access memory) and nonvolatile memory elements, e.g., a solid-state device. The software in memory may include one or more separate programs, each of which comprises an ordered listing of executable instructions for implementing logical functions. The software in the memory may for instance include methods described herein in accordance with exemplary embodiments and a suitable operating system (OS). The OS essentially controls the execution of other computer (application) programs and provides scheduling, input-output control, file and data management, memory management, and communication control and related services. It may further control the distribution of tasks to be performed by the processing units.

The methods described herein shall typically be in the form of executable program, script, or, more generally, any form of executable instructions.

The computerized unit can further include a display controller coupled to a display. In exemplary embodiments, the computerized unit further includes a network interface or transceiver for coupling to a network (not shown). In addition, the computerized unit will typically include one or more input and/or output (I/O) devices (or peripherals) that are communicatively coupled via a local input/output controller. A system bus interfaces all components. Further, the local interface may include address, control, and/or data connections to enable appropriate communications among the aforementioned components. The I/O controller may have additional elements, which are omitted for simplicity, such as controllers, buffers (caches), drivers, repeaters, and receivers, to allow data communication.

When the computerized unit is in operation, one or more processing units executes software stored within the memory of the computerized unit, to communicate data to and from the memory and/or a storage unit (e.g., a hard drive and/or a solid-state memory), and to generally control operations pursuant to software instruction. The methods described herein and the OS, in whole or in part are read by the processing elements, typically buffered therein, and then executed. When the methods described herein are implemented in software, the methods can be stored on any computer readable medium for use by or in connection with any computer related system or method.

Computer readable program instructions described herein can be downloaded to processing elements from a computer readable storage medium, via a network, for example, the Internet and/or a wireless network. A network adapter card or network interface may receive computer readable program instructions from the network and forwards such instructions for storage in a computer readable storage medium interfaced with the processing means.

Aspects of the present invention are described herein notably with reference to a flowchart and a block diagram. It will be understood that each block, or combinations of blocks, of the flowchart and the block diagram can be implemented by computer readable program instructions.

These computer readable program instructions may be provided to one or more processing elements as described above, to produce a machine, such that the instructions, which execute via the one or more processing elements create means for implementing the functions or acts specified in the block or blocks of the flowchart and the block diagram. These computer readable program instructions may also be stored in a computer readable storage medium.

The flowchart and the block diagram in the accompanying drawings illustrate the architecture, functionality, and operation of possible implementations of the computerized unit, methods of operating it, and computer program products according to various embodiments of the present invention.

While the present invention has been described with reference to a limited number of embodiments, variants, and the accompanying drawings, it will be understood by those skilled in the art that various changes may be made, and equivalents may be substituted without departing from the scope of the present invention. In particular, a feature (device-like or method-like) recited in a given embodiment, variant or shown in a drawing may be combined with or replace another feature in another embodiment, variant or drawing, without departing from the scope of the present invention. Various combinations of the features described in respect of any of the above embodiments or variants may accordingly be contemplated, that remain within the scope of the appended claims. In addition, many minor modifications may be made to adapt a particular situation or material to the teachings of the present invention without departing from its scope. Therefore, it is intended that the present invention is not limited to the particular embodiments disclosed, but that the present invention will include all embodiments falling within the scope of the appended claims. In addition, many other variants than explicitly touched above can be contemplated. For example, other types of neural networks can be contemplated for use in the ML computational models.

REFERENCE LIST

1   Overall system (computerized system interfaced with actual machine)
2   Computerized system
3   Hydraulic machine
11  Encoder
12  Control module
14  Adaptation module
15  Simulation module
21  Simulated actuator dynamics
22  Privileged information (system response) used by the encoder for training purposes
31  Actual actuator dynamics
z   Latent variable as learned to be generated by the encoder for each actuator
z*  Latent variable as generated by the encoder to train the adaptation module

$\hat{Z}$      Latent variable as learned to be generated by the adaptation module

$\hat{Z}_{init}$    Initial estimate of the latent variable

$\dot{x}_t$      Actuator speeds (states) at time point $t$

$t$       Time point

$u_t$      Control signals generated by the control module (controller)

$o_t$      Observations

$ref_t$    Actuator reference at time point $t$

**Claims**

1. A computer-implemented method of controlling a given machine (3), in particular a hydraulic machine (3), wherein the method comprises:

   loading:

   a control module (12) that has been trained together with an encoder (11), whereby the encoder has learned to generate a latent variable for each actuator of each machine of a set of machines based on dynamics (21) of said each actuator and the control module (12) has learned to produce control signals to control said each actuator based on said dynamics (21) and said latent variable, and

   an adaptation module (14), which has been trained to estimate said latent variable for said each actuator based on said dynamics (21) and control signals that the control module (12) has learned to produce;

   running the control module (12) to produce initial control signals and applying said initial control signals to one or more actuators of a given machine (3);

   running the adaptation module (14) to estimate one or more latent variables for the one or more actuators, respectively, based on the initial control signals and initial dynamics (31) of the one or more actuators as observed in response to applying said initial control signals; and

   operating the one or more actuators based on further control signals as produced by the control module (12) using the one or more latent variables estimated.

2. The computer-implemented method according to claim **1,** wherein
   the steps of running the control module (12) and running the adaptation module (14) are interlaced, so as to repeatedly estimate and accordingly refine the one or more latent variables, whereby the control module (12) is adaptively run based on the one or more latent variable as repeatedly estimated.

3. The computer-implemented method according to claim **1** or **2,** wherein the dynamics (21) of said each actuator are simulated dynamics (21), whereby

   the encoder (11) has learned to generate said latent variable based on said simulated dynamics (21),

   the control module (12) has learned to produce said control signals based on the simulated dynamics (21) and the latent variable as generated by the encoder (11) for said each actuator, and

   the adaptation module (14) has been trained to estimate said latent variable for said each actuator based on the simulated dynamics (21) and the control signals that the control module (12) has learned to produce.

4. The computer-implemented method according to claim **3,** wherein

   the encoder (11) has learned to generate said latent variable for said each actuator based on a response of said each actuator as obtained from the simulated dynamics (21), and

   each of the control module (12) and the adaptation module (14) has been trained on measurable properties obtained from the simulated dynamics (21).

5. The computer-implemented method according to claim **3** or **4,** wherein
   said each machine of said set of machines is a hydraulic machine, whereby the simulated dynamics (21) are dynamics that have been simulated for each actuator of said each machine of the set of hydraulic machines, based on kinematic and/or dynamic properties of the actuators.

6. The computer-implemented method according to any one of claims **1** to **5,** wherein
   running the adaptation module (14) comprises initially running the adaptation module (14) based on initial estimates of the one or more latent variables.

7. The computer-implemented method according to any one of claims **1** to **6,** wherein the control module (12) takes as input a history of input-output observations for each of the one or more actuators, said history based on said dynamics (21), whereby each input-output pair of the input-output observations consists of

output signals as produced by the control module (12) at a given time, and
states of each of the one or more actuators as obtained in response to applying such output signals to each of the one or more actuators.

8. The computer-implemented method according to claim **7,** wherein the control module (12) further takes as input a reference of future desired states for each of the one or more actuators.

9. The computer-implemented method according to any one of claims **1** to **8,** wherein the method further comprises, prior to loading the control module (12) and the adaptation module (14),

training the control module (12) together with the encoder (11), for

the encoder (11) to learn to generate said latent variable based on said dynamics (21), and
the control module (12) to learn to produce said control signals based on said dynamics (21) and said latent variable, and

training the adaptation module (14) for it to learn to estimate said latent variable for said each actuator.

10. A computerized system (2) adapted to be interfaced with a given machine (3), wherein the computerized system (2) is configured to:

load:

a control module (12) that has been trained together with an encoder (11), whereby the encoder (11) has learned to generate a latent variable for each actuator of each machine of a set of machines based on dynamics (21) of said each actuator and the control module (12) has learned to produce control signals to control said each actuator based on said dynamics (21) and said latent variable, and
an adaptation module (14), which has been trained to estimate said latent variable for said each actuator based on said dynamics (21) and control signals that the control module (12) has learned to produce;

run the control module (12) to produce initial control signals and applying said initial control signals to one or more actuators of a given machine (3);
run the adaptation module (14) to estimate one or more latent variables for the one or more actuators, respectively, based on the initial control signals and initial dynamics (31) of the one or more actuators as observed in response to applying said initial control signals; and
operate the one or more actuators based on further control signals as produced by the control module (12) using the one or more latent variables estimated.

11. The computerized system (2) according to claim **10,** wherein the computerized system (2) is further configured to run the control module (12) and the adaptation module (14) in an interlaced manner, so as to repeatedly estimate and accordingly refine the one or more latent variables, whereby the control module (12) is adaptively run based on the one or more latent variable as repeatedly estimated, in operation.

12. The computerized system (2) according to claim **10** or **11,** wherein the computerized system (2) is further configured to simulate (15) said dynamics (21) and accordingly train each of the encoder (11), the control module (12), and the adaptation module (14), based on said dynamics (21).

13. A system (1) comprising

the computerized system (2) according to any one of claims **10** to **12,** as well as
said given machine (3), wherein the computerized system (2) is interfaced with the given machine (3).

14. The system (1) according to claim **13,** wherein
the given machine (3) is a hydraulic machine (3).

15. A computer program product for controlling a given machine (3), the computer program product comprising a computer readable storage medium having program instructions embodied therewith, the program instructions executable by processing means of a computerized system (2) to cause the latter to perform all the steps of the method according to any of claims **1** to **9.**

FIG. 1

FIG. 2A

FIG. 2B

FIG. 2C

FIG. 3

FIG. 4

Before adaptation | After adaptation

FIG. 5A

FIG. 5B

FIG. 5C

FIG. 6

FIG. 7

FIG. 8A

FIG. 8B

FIG. 9

FIG. 10

FIG. 11

**EP 4 607 293 A1**

Europäisches
Patentamt
European
Patent Office
Office européen
des brevets

## EUROPEAN SEARCH REPORT

**Application Number**

EP 24 15 9728

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KR 2021 0151812 A (BOSCH GMBH ROBERT [DE]) 14 December 2021 (2021-12-14) * the whole document * | 1-15 | INV. G05B13/02 |
| A | KIM SUNG-WOO ET AL: "Force Control of a Hydraulic Actuator With a Neural Network Inverse Model", IEEE ROBOTICS AND AUTOMATION LETTERS, IEEE, vol. 6, no. 2, 25 February 2021 (2021-02-25), pages 2814-2821, XP011844629, DOI: 10.1109/LRA.2021.3062353 [retrieved on 2021-03-17] * the whole document * | 1-13 | |
| A | LIU WEIWEI ET AL: "Review on control systems and control strategies for excavators", JOURNAL OF PHYSICS: CONFERENCE SERIES, INSTITUTE OF PHYSICS PUBLISHING, GB, vol. 2301, no. 1, 1 July 2022 (2022-07-01), XP020428365, ISSN: 1742-6588, DOI: 10.1088/1742-6596/2301/1/012023 [retrieved on 2022-07-01] * the whole document * | 1-15 | |

**TECHNICAL FIELDS SEARCHED (IPC)**

G05B
F15B
E02F
B25J

The present search report has been drawn up for all claims

| Place of search | Date of completion of the search | Examiner |
|---|---|---|
| The Hague | 23 July 2024 | Itoafa, Alex |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 9728

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2024

| Patent document cited in search report | Publication date | Patent family member(s) | Publication date |
|---|---|---|---|
| KR 20210151812 A | 14-12-2021 | CN 113646709 A | 12-11-2021 |
| | | DE 102019205297 A1 | 15-10-2020 |
| | | EP 3953771 A1 | 16-02-2022 |
| | | KR 20210151812 A | 14-12-2021 |
| | | WO 2020207953 A1 | 15-10-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. JUD ; S. KERSCHER ; M. WERMELINGER ; E. JELAVIC ; P. EGLI ; P. LEEMANN ; G. HOTTIGER ; M. HUTTER**. HEAP - The autonomous walking excavator. *Automation in Construction*, 2021, vol. 129, 103783
- **P. EGLI ; M. HUTTER**. A General Approach for the Automation of Hydraulic Excavator Arms Using Reinforcement Learning. *IEEE Robotics and Automation Letters*, 2022, vol. 7 (2), 5679-5686
- **M. LEE ; H. CHOI ; C. KIM ; J. MOON ; D. KIM ; D. LEE**. Precision Motion Control of Robotized Industrial Hydraulic Excavators via Data-Driven Model Inversion. *IEEE Robotics and Automation Letters*, 2022, vol. 7 (2), 1912-1919
- **J. WEIGAND ; J. RAIBLE ; N. ZANTOPP ; O. DEMIR ; A. TRACHTE ; A. WAGNER ; M. RUSKOWSKI**. Hybrid Data-Driven Modelling for Inverse Control of Hydraulic Excavators. *2021 IEEE/RSJ International Conference on Intelligent Robots and Systems (IROS)*, 2021, 2127-2134
- **A. TAHERI ; P. GUSTAFSSON ; M. ROSTH ; R. GHABCHELOO ; J. PAJARINEN**. Nonlinear Model Learning for Compensation and Feedforward Control of Real-World Hydraulic Actuators Using Gaussian Processes. *IEEE Robotics and Automation Letters*, 2022, vol. 7 (4), 9525-9532
- **J. NURMI ; J. MATTILA**. Automated Feed-Forward Learning for Pressure-Compensated Mobile Hydraulic Valves With Significant Dead-Zone. *ASME/BATH 2017 Symposium on Fluid Power and Motion Control. American Society of Mechanical Engineers Digital Collection*, 2017
- **W. YU ; J. TAN ; C. KAREN LIU ; G. TURK**. Preparing for the Unknown: Learning a Universal Policy with Online System Identification. *Robotics: Science and Systems XIII. Robotics: Science and Systems Foundation*, 2017

- **W. YU ; C. K. LIU ; G. TURK**. Policy Transfer with Strategy Optimization. *International Conference on Learning Representations*, 2018
- **W. YU ; J. TAN ; Y. BAI ; E. COUMANS ; S. HA**. Learning Fast Adaptation With Meta Strategy Optimization. *IEEE Robotics and Automation Letters*, 2020, vol. 5 (2), 2950-2957
- **M. GUO ; W. YU ; D. HO ; J. WU ; Y. BAI ; K. LIU ; W. LU**. *Universal Controllers with Differentiable Physics for Online System Identification*, 2021
- Implicit Generation and Modeling with Energy Based Models. **Y. DU ; I. MORDATCH**. Advances in Neural Information Processing Systems. Curran Associates, Inc., 2019, vol. 32
- **M. RUDERMAN**. Full- and reduced-order model of hydraulic cylinder for motion control. *IECON 2017 - 43rd Annual Conference of the IEEE Industrial Electronics Society*, 2017, 7275-7280
- **J. SCHULMAN ; F. WOLSKI ; P. DHARIWAL ; A. RADFORD ; O. KLIMOV**. Proximal Policy Optimization Algorithms. *arXiv: 1707.06347*, 2017
- **J. SCHULMAN ; P. MORITZ ; S. LEVINE ; M. JORDAN ; P. ABBEEL**. High Dimensional Continuous Control Using Generalized Advantage Estimation. *arXiv:1506.02438*, 2018
- **B. AMOS ; L. XU ; J. Z. KOLTER**. Input Convex Neural Networks. *Proceedings of the 34th International Conference on Machine Learning. PMI,R*, 2017, 146-155
- **E. JELAVIC ; T. KAPGEN ; S. KERSCHER ; D. JUD ; M. HUTTER**. Harveri: A Small (Semi-) Autonomous Precision Tree Harvester. *Innovation in Forestry Robotics: Research and Industry Adoption, ICRA 2022 IFRRIA Workshop*, 2022